# EUROPEAN PATENT APPLICATION

(11) **EP 2 826 372 A1**
(43) Date of publication of application: **21.01.2015**
(21) Application number: 12871139.7
(22) Date of filing: 13.03.2012
(51) Int. Cl.: A01N 65/12, A01P 3/00, A01P 5/00

(54) **USE OF ESSENTIAL OILS, SUPERCRITICAL EXTRACTS AND AQUEOUS RESIDUES GENERATED DURING A PROCESS FOR OBTAINING ORGANIC EXTRACTS FROM THE ARTEMISIA ABSINTHIUM L PLANT**

(71) Applicant: Consejo Superior De Investigaciones Científicas (CSIC), 28006 Madrid (ES); Centro De Investigación Y Tecnología Agroalimentaria De Aragón, 50059 Zaragoza (ES); Universidad De Zaragoza, 50009 Zaragoza (ES); Universidad De La Laguna, Santa Cruz de Tenerife (ES)
(72) Inventor: GONZÁLEZ COLOMA, Azucena, E-28006 Madrid (ES); ANDRÉS YEVES, María Fe, E-28006 Madrid (ES); DÍAZ HERNÁNDEZ, Carmen Elisa, E-38206 San Cristobal de La Laguna (Santa Cruz de Tenerife) (ES); BURILLO ALQUÉZAR, Jesús, E-50059 Zaragoza (ES); CABRERA PÉREZ, Raimundo, E-38206 Santa Cruz De Tenerife (ES); URIETA NAVARRO, José, E-50009 Zaragoza (ES)
(74) Representative: Ungria López, Javier
(86) International application number: PCT/ES2012/070162
(87) International publication number: WO 2013/135915

(57) **Abstract**

The present invention starts with a method for obtaining organic extracts of the *Artemisia absinthium L.* plant, which includes: a methodology phase for producing said plant, an extraction phase during which said essential oil and a non-volatile extract are obtained, and a phase of extracting supercritical extracts with CO₂, and refers specifically to the use of the essential oil and/or the supercritical extract extracted as fungicides against phytopathogenic fungi. For said purpose, the *Artemisia absinthium L.* plant is used, specifically the Candial variety from Teruel and/or Sierra Nevada in Spain. The present invention also relates to the aqueous residue generated during said method, which includes an organic compound which in turn contains (Z)-2,6-dimethylocta-5,7-diene-2,3-diol as an active organic compound against nematodes. The method for obtaining said organic portion and the corresponding active organic component thereof is protected by the present application.

## Description

### TECHNICAL FIELD

The present specification relates to a method for extracting organic derivatives from the *Artemisia Absinthium L.* plant, commonly known as wormwood and more specifically to the use of said extracts as an active fungicide compound against phytopathogenic fungi and the use of the residues generated during the method as nematicides against phytopathogenic nematodes. The invention is based on the organic production of a specific chemotype by the plant, with the aim of producing organic extracts through steam flushing (essential oils), supercritical extracts with CO₂ and collecting the aqueous residue of the extraction of the essential oil (hydrolate), considered by the agricultural sector to be a residue with no value.

The invention therefore falls within the general field of industrial chemistry, since it refers to the process for obtaining organic extracts derived from the *Artemisia absinthium L.* (wormwood) plant. More specifically, it falls within the field of agriculture, which is the most important use of said compounds and the residues generated during the fungicide and nematicide process thereof, respectively. Given that they are natural substances, they are of high value for organic agriculture, i.e. where synthetic chemical products are not used.

### STATE OF THE ART

*Artemisia absinthium L.,* commonly known as *"wormwood",* is a medicinal herbaceous plant, from the Asteraceae family. Each year, straight branches grow from its base, which are between 0.50 and 1.20 meters high and dry out in autumn after yielding fruit. The basal portions of these branches survive through the winter and in the next season, new branches grow from their shoots. The plant as a whole is whitish in colour, owing to the abundance of hairs covering practically the entire surface of its stem and leaves. In terms of its distribution, it mainly spans from Central Asia to Western Europe, with some small populations in North Africa. Many people have cultivated this plant given its aroma, particularly in the United States, the former USSR and France. The plant is harvested when in full bloom, between June and August. In the first year, harvests are low but in subsequent years, two harvests may be made, both in July and at the end of October, weather conditions permitting.

Although the wormwood marketed is most commonly obtained via cultivation, in many places, wild populations of the plant are harvested, thus obtaining a product of heterogeneous quality and performance. Wormwood micro-propagation methods have also been developed to produce plants, in order to obtain secondary metabolites.

This plant was known since antiquity by the Egyptians and knowledge of the plant was then passed down to the Greeks, given its various healing uses, for example as a tonic, febrifuge and anthelmintic. In addition to its medicinal powers, wormwood was also traditionally used as a flavouring agent, its active ingredient absinthin (a bitter substance) being used to prepare commercial drinks such as vermouth. The essential oil and alcohol derived from wormwood constitute the basic ingredients used in absinthe.

Since early times, wormwood has likewise been used to treat digestive conditions, since it stimulates the appetite, prevents the formation of gasses in the digestive tract, stimulates the secretion of gastric juices and bile in both the gallbladder and liver and protects against liver disease. Similarly, it has anti-pyretic, anti-oxidant and anti-inflammatory properties. It has also been used as an antidote to opium and other poisonous substances that depress the central nervous system. It also has known uses in perfumes, for example as is disclosed in international patent application WO0249600 A1 *("Perfume compositions"),* in addition to elements thereof being used in alternative medicines, as is described, for example, in Spanish patent ES 2076896 B1 *("Process for producing moxas"*).

Likewise, its insecticide and insect repellent properties used to fight pests are traditionally known and often used, especially with aphids, mites, cochineals, ants, caterpillars and other insects, by spraying extracts thereof onto affected plants. It also repels cabbage butterflies, mites, rust fungus, snails and slugs, when sprayed preventatively. The essential oil extracted from certain chemotypes of wormwood has also been proven to serve as an acaricide against the red spider and as an insecticide against weevils and the common fly. Furthermore, it has been used to repel fleas, flies, mosquitoes, moths and ticks. What is more, the extract has also proven to have toxic, antifeedant effects that stop the scarab beetle (*Leptinotarse decemnlineata).*

Furthermore, several phytoextracts obtained from the stem and roots of the wormwood plant are known to have a certain nematicide effect on juvenile plants infected with *Meloidogyne incognita.*

Traditionally, natural pesticides were used to protect crops. However, over the past several decades, they have been almost entirely replaced with more effective synthetic compounds. Nevertheless, the increase in problems linked to cross resistance, risks to public health and environmental damages has lead to the search for natural products containing pesticide properties. Therefore, some natural nematicides with Neem (Neemate), mustard extract (Nemitol), sesame seed extract (Dragonfire CPP), and fungal metabolites (DiTera) can be found on the market, which have variable effectiveness on different species of phytoparasitic nematodes. Of all those natural fungicides marketed, we might cite those containing red thyme essential oil (8 %), *Thymus zygis* (Bio 75), cinnamon oil (60 %) (Cinnacode) and citrus seed extract (Zytroseed). In spite of this, however, more selective and biodegradable components still need to be found to replace synthetic pesticides that persist in the environment and have a wide spectrum of toxicity. This is particularly relevant given that organic production through organic agriculture is an emerging market, thus meaning there is an ever growing demand for natural agrochemicals.

Until now, wormwood has been extracted and used by employing traditional methods such as marinating the plant or using it to prepare a decoction or infusion. Aside from the fact that the use, dosage and efficacy of these methods are almost always based on tradition and experience, they present the drawback of not enabling full benefit to be derived from the plant's full bio-pesticide capacity. Moreover, they cannot be used for industrial application, since neither the benefit to be derived, nor the concentration or efficacy of the solutions used can be predicted.

In order to resolve this need, the inventors of the present application developed a method for extracting bio-insecticide derivatives from the *Artemisia Absinthium L.* plant in Spanish patent application P201031389, which is characterised in that it defines an extraction phase of organic extracts, thus obtaining essential oil and non-volatile extract, and an extraction phase in which to extract supercritical extracts with CO₂, starting with a plant of a specific chemotype, which is previously selected and cultivated. Bio-insecticide derivatives are thus obtained from the *Artemisia Absinthium L* plant, therefore meaning optimal benefit can be derived from the extracts of said plant, with results that may be reproduced and applied industrially. Agronomic and economical organic production settings are therefore established for the wormwood plant (*Artemisia absinthium L.*) in experimental plots, with the aim of producing organic extracts consisting of essential oil and non-volatile extract and, in another phase in which to extract supercritical extracts with CO₂, with a characterised chemical composition, with experimentally demonstrated repellent effects against lepidoptera larvae, for example from the species *Spodoptera littoralis,* aphids and the Colorado potato beetle *(Leptinotarsa decemlineata),* in addition to affecting the development of the root depth of barley, *Hordeum vulgare.*

Nevertheless, carrying out said method proved the existence of a significant variation, both qualitative and quantitative, in the chemical composition of the essential oil, depending on the chemotype of wormwood used.

In the present invention, a new industrial use of the essential oils and supercritical extracts extracted from the *Artemisia Absinthium L.* plant using the method cited shall be tested as a fungicide to control the growth of phytopathogenic fungi, which affect agricultural crops (but not animals, as is already known to be the case for some chemotypes of this plant). Furthermore, one relevant aspect of the present invention is the application or use of the aqueous residues or hydrolates generated in said process (which are common by-products in this kind of aromatic plant distillation) as nematicides to prevent phytopathogenic nematodes from attacking agricultural crops. This is possible owing to the use of a variety of specific *Artemisia* that grow in Spain, with indigenous populations in Teruel and Sierra Nevada. These populations have chemotypes which are specific but at the same time similar, without thujone, from which oils and supercritical extracts are obtained, generating residues with the proposed applications.

### DESCRIPTION OF THE INVENTION

The present invention firstly relates to the use of an essential oil and/or a supercritical extract, both of which are taken from the *Artemisia absinthium L* plant populations in Teruel and/or the Sierra Nevada, as a fungicide, i.e., to control phytopathogenic fungi in agricultural crops. This essential oil and this supercritical extract are obtained through an extraction method comprising a methodological stage for producing said plant, an extraction stage for extracting organic extracts, in which said essential oil and a non-volatile extract (of an ethanolic nature) are obtained and a supercritical CO₂ extraction stage. These extracts have a defined chemical composition.

In the present specification, supercritical extract is to be understood as those fractions obtained by means of extracting vegetable material using supercritical CO₂ under defined pressure and temperatures.

Likewise, a second object of the invention is the aqueous residue (or hydrolate) generated in the essential oil extraction stage of the aforementioned method (and which is defined in Spanish patent application P201031389) and the use thereof as a nematicide, i.e. to control phytopathogenic nematodes in agricultural crops. In the case of the present invention, said residue is specifically obtained from the method in which essential oil is extracted from the Candial variety of the *Artemisia absinthium L.* plant from Teruel and/or the Sierra Nevada. Said residue thus comprises an organic component, in turn containing (Z)-2,6-dimethylocta-5,7-diene-2,3-diol as an active organic compound against phytopathogenic nematodes. Within the present invention, it is also possible to use just the organic part extracted from the aqueous residue or hydrolate to control phytopathogenic nematodes in agricultural crops, and even the active nematicide component contained by the organic portion of the aqueous residue, namely (Z)-2,6-dimethylocta-5,7-diene-2,3-diol as well.

The chemical composition of the essential oil and of the supercritical extract obtained from plants is usually characteristic to each species. Moreover, it is known that in the field of agriculture, the function of the biotope (days of sunlight, climate, soil composition, altitude, etc.,) may cause the same plant to secrete very different essences from a biochemical point of view. The notion of chemotype thus arose from these differences in the biochemical composition of essential oils; two chemotypes of the same essential oil not only possess different therapeutic properties but also quite variable toxicity indices. In the present invention, the Candial variety of the *Artemisia absinthium L.* plant from populations in Teruel and the Sierra Nevada, is specifically used, which has made it possible to obtain a specific essential oil, which includes the uses sought. On 25/05/2009, the Candial variety of the species *Artemisia absinthium L*. was deposited at the Community Plant Variety Office, located at 3, Bd. Maréchal Foch. BP 10121. 49101 Angers Cedex 02-France, by AZAGRA Patentes y Marcas, in representation of Ms Azucena González Coloma from the SPANISH NATIONAL RESEARCH COUNCIL (CSIC), C/ Serrano 142, 28006 MADRID (SPAIN); and Mr Jesus Burillo Alquézar from the AGRIFOOD RESEARCH AND TECHNOLOGY CENTRE OF ARAGON (CITA), Avda. Montañana 930, 50059 ZARAGOZA (SPAIN), being recorded under deposit number 2009/0972. It must be emphasised that the populations of this Candial variety found in Teruel or the Sierra Nevada are of a similar chemotype, with just a few variations in the composition of minor products, it therefore being possible to obtain oils from plants from one of these two regions or a mixture of the two, which contain the properties required to fulfil the aims of the present invention.

When carrying out the method, it is important to bear in mind that, in addition to the origin of the plant (which defines the chemotype), numerous factors may affect the chemical composition of the essential oil obtained, for example growth conditions and the plant's state of development. These factors should therefore be controlled. For example, cultivation in vitro, in a greenhouse or in a cultivation field influences the end chemical composition of the oil. In this specific case, the production stage of the methodology preferably comprises cultivating, in the field, a chemotype of the plant in question selected for its adaptability to cultivation and its chemical composition. As already mentioned, this specific chemotype is the Candial variety, indigenous to Teruel (Aragon) and the Sierra Nevada (Granada), which does not contain thujone. Said cultivation is preferably carried out by means of multiplication and more preferably, by means of cuttings or seeds in a seed nursery, in order to subsequently be planted in the plantation area. This plantation area is preferably located in high areas with a rainfall of over 400-450 mm per year and work is also preferably carried out by means of mechanical cultivation. Cultivation begins in the first year of planting and from this moment, the biomass portion of the plant should be harvested, which is used to carry out the method for obtaining organic extracts, this portion preferably consisting of the leaves and flower heads, when the plants have reached the full phenological state of full bloom. The biomass harvested should then be dried and ground. Drying is preferably carried out in the shade, under an air stream, for a period of approximately 8 days.

In the extraction phase of organic extracts, the aqueous residue or hydrolate is also generated, which is usually carried out by means of hydro-distillation (by flushing vapour) and the organic extraction of the material harvested, thus obtaining the essential oil and a non-volatile extract, in addition to an aqueous by-product or hydrolate constituting a residue from the process.

The supercritical extraction phase with CO₂ of extracts having a certain chemical composition is preferably carried out using a compression pump with a filter, an extraction cylinder, two collectors, a cylindrical cooling device, a heat exchanger, a pressure sensor and a flow metre. The harvested material is thus introduced into the extraction cylinder and infused symmetrically with inert, porous materials that enable a homogenous flow of CO₂. It is then heated up until a temperature of 40 °C is reached, in order to then compress the pump and the CO₂, until a pressure of 90 bars is reached, at which point the supercritical fluid under working pressure fills the extraction cylinder, with the pressure being regulated in the two collectors, by means of the necessary valves, and the temperature being regulated by means of the cooling device, in such a way that the first of the collectors serves to eliminate heavy compounds such as waxes, and the second collector serves to collect the supercritical extract.

Under preferably conditions, the average particle size of the particles collected is 0.5 mm, and the gas flows through the extractor cylinder at 25 °C and 1 atm. is 10.5 1/min.

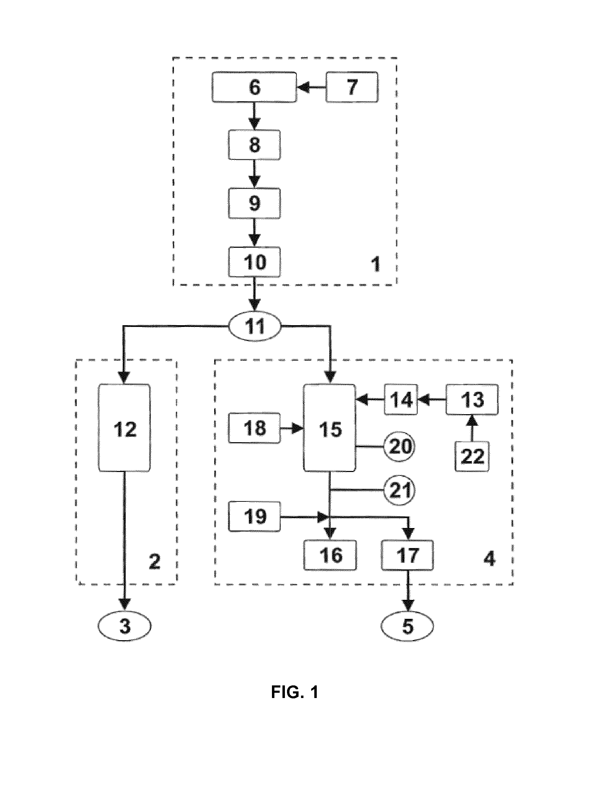

Figure 1 presents a preferred practical embodiment of the method in question, with a simplified block diagram to illustrate the method through which the products that are the object of interest of this invention are obtained.

This extraction method for extracting organic wormwood derivatives holds multiple advantageous over other methods available in the state of the art, for example the fact of allowing for a production methodology for cultivating in the field, with specific chemotypes selected, and by means of controlled extraction of the raw material, thus facilitating controlled, predictable production that may be industrialised. The advantage of controlling the origin brought about by chemical and biological standardisation of the organic extracts obtained also stands out, just as optimising the performance achieved using supercritical CO₂ extraction.

The efficacy of this method has been verified through experiments. To this end, studies have been carried out on wormwood crops from the registered Candial variety (populations in Teruel and Sierra Nevada) in experimental plots, in order to analyse the production and chemical composition of the essential oil and extracts (Table 1). Annual analyses (from 2008 to 2010) have been carried out on the essential oils from the cultivated populations, by means of gas chromatography-mass spectrometry (GC-MS).

In general, the essential oil obtained from the *A. absinthium* species consists of a more or less complex mixture of terpenic compounds, with low molecular weight. More particularly, interest in the specific essential oil obtained from the present invention for the use intended (fungicide) stems from the activity of its compounds. Indeed, the essential oil obtained from the *A. absinthium* from populations in Teruel (ATT) and the Sierra Nevada (AASN), as can be seen in Table 1, mainly has terpenic components, which pertain to several types of structures, monoterpenes and sesquiterpenes, appearing in variable quantities depending on the year the plant was harvested. The main component is epoxyocimene (26-44 %), followed by chrysanthenol (12-30 %) and monoterpene (Z)-2,6-dimethylocta-5,7-diene-2,3-diol (0.001-20 %). Therefore, it is possible to consider the essential oil extracted and applied in the present invention as a fungicide to include the components: epoxyocimene at between 26-44 % of the total composition, chrysanthenol at between 12-30 %, and monoterpene (Z)-2,6-dimethylocta-5,7-diene-2,3-diol at between 0.001-20%, and preferably appears in a maximum of 20% of the total composition.

**Table 1. Chemical composition of the Candial variety of A. absinthium from the Teruel (AVAAT) and Sierra Nevada (AVAASN) populations**

| Compounds | AVAAT | | | AVAASN | | |
|---|---|---|---|---|---|---|
| | 2008 | 2009 | 2010 | 2008 | 2009 | 2010 |
| | relative % | | | | | |
| α-Pinene | 2.09 | 2.70 | | 1.25 | | 1.62 |
| Fenchene | 0.56 | 1.07 | | | | |
| Camphene | 0.76 | | | | | |
| Sabinene | 0.53 | | | | | |
| β-Pinene | | | | | | |
| β-Mircene | 1.23 | 0.68 | | 0.86 | 1.15 | 1.13 |
| β-Ocimene | | | | 1.03 | 1.54 | 1.27 |
| 1,8-Cineol (limonene) | 2.17 | 2.43 | | | | |
| 1,3,6-Octatriene-3,7-dimethyl | 0.75 | 0.72 | | | | |
| Linalool | 5.06 | 4.28 | 3.42 | 3.63 | 3.49 | 3.54 |
| 152 81 68-79-41-53 | 1.08 | 1.25 | 0.54 | | 1.94 | 0.49 |
| Epoxyocimene | 44.11 | 38.92 | 25.89 | 43.33 | 42.72 | 38.77 |
| Epoxyocimene (isomer) | 2.99 | 7.74 | 0.99 | 1.93 | 2.45 | 2.16 |
| Chrysanthenol | 12.21 | 12.71 | 30.32 | 20.73 | 23.48 | 22.49 |
| 152 82 67-71-43-41 | 1.17 | 1.26 | 1.34 | 0.89 | 1.30 | 1.64 |
| Chrysanthenyl acetate | 6.58 | 7.35 | | | 0.71 | 0.46 |
| (Z)-2,6-dimethylocta-5,7-diene-2,3-diol | | 1.72 | 20.21 | 1.53 | 1.72 | 1.90 |
| α-Copaene | | | | 0.53 | 0.73 | 0.70 |
| β-Bourbonene | | | | 0.55 | 0.61 | |
| β-Element | | | 0.98 | 1.54 | 1.46 | 2.57 |
| Trans-Caryophyllene | 3.38 | 4.20 | 2.47 | 5.56 | | 5.43 |
| 204 161 105-91-119-79 | 1.30 | 1.36 | 1.15 | 2.70 | 5.99 | 1.86 |
| Neryl acetate | 0.52 | | 0.53 | 0.56 | | 0.92 |
| Sesquiterpenic alcohol | 0.52 | 0.51 | 1.79 | | | 0.74 |
| Azulene | 1.13 | 1.09 | 0.87 | 1.11 | | |

Owing to the chemical composition of the essential oil obtained from the process, the same is useful as a fungicide agent. The extracts obtained preferably by hydro-distillation (by flushing vapour) in the process described (essential oils) have been proven to be effective fungicides against phytopathogenic fungi, preferably against the species *Alternaria alternata, Fusarium oxysporum, F. moniliforme* and *F. solani,* being even more effective against *Botrytys cinnerea.*

The performance obtained from the essential oil varies between 0.1-0.2 % of the green biomass harvested and used in the method.

As for the supercritical extract obtained from the method, the same is characterised in the publications: L. Martin, et al. "Supercritical fluid extraction of wormwood (Artemisia absinthium L.) (2011). J. Supercrit. Fluids 56, 64-71 (2011). "Comparative chemistry and insect antifeedant action of traditional (Clevenger and Soxhlet) and supercritical extracts (CO2) of two cultivated wormwood (Artemisia absinthium L.) populations". Ind. Crop. Prod. 34, 1615-1621 (2011).

As regards the aqueous residue, or hydrolate, generated in the process of extracting the essential oils, it is a very effective nematicide against nodule forming phytopathogenic nematodes *(Meloidogyne* sp.). Furthermore, its aqueous state facilitates the direct application of the hydrolyte generated in the extraction to the crop to be treated, as a nematicide formula, without requiring any other component, which constitutes an additional advantage for this residue now used as an processed product.

The performance obtained from the hydrolate or aqueous residue in the method described varies between 150-200 litres per 800-1000 kg of biomass harvested and used in said method.

Said aqueous residue is characterised in that it contains one organic portion that is active against nematodes (also referred to in the present specification as "organic component of the aqueous residue"), which mostly comprises (Z)-2,6-dimethylocta-5,7-diene-2,3-diol of general formula (I), an active organic component also present in the oil, but in a lesser amount (see Table 1).

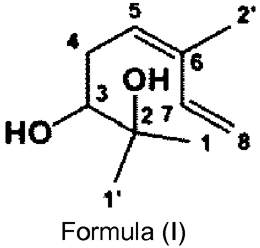

Ultimately, this aqueous residue or hydrolate contains a natural and active organic portion, which comes from the plant and is flushed in the water used in the extraction process for extracting the essential oil, this water usually being thrown away as residue. The active organic portion of the aqueous residue is usually obtained at a concentration of between 1 and 4 gr/l of aqueous residue. The aforementioned active compound (Z)-2,6-dimethylocta-5,7-diene-2,3-diol represents at least 80 % of the total of this organic portion of the hydrolyte and never exceeds 90 % thereof (i.e., it is contained in a percentage comprised between 80 % and 90 % of the total residue composition, both limits included) and is responsible for the nematicide activity of the aqueous residue.

The authors of the present invention have confirmed that the organic portion or organic component of the aqueous residue containing this active component, (Z)-2,6-dimethylocta-5,7-diene-2,3-diol of formula (I), may be extracted conventionally by means of a liquid-liquid extraction process, although this process requires the use of a solvent and the handling of considerable volumes of products. For this reason, it is more advantageous to extract the organic portion of the aqueous residue through a solid state extraction process, which comprises the following steps:
a) decanting the aqueous residue to eliminate traces of essential oil,
b) mixing, by stirring, the previous aqueous phase with activated carbon in a ratio of 10:1, until the organic portion is absorbed; and
c) drying the carbon at 35 °C.

The aqueous residue is preferably decanted by adding CINa to facilitate the process.

99 % of the organic component of the residue (organic portion), containing between 80 % and 90 % of the active organic component (Z)-2,6-dimethylocta-5,7-diene-2,3-diol, is adsorbed in the activated carbon. As a result of the process, this organic component or organic portion of the residue in solid form is adsorbed in activated carbon. This makes possible multiple functions from an industrial point of view, since it is possible to prepare an in-line filter cartridge, for example, which is made up of said activated carbon with the organic portion adsorbed, in such a way that the carbon of said filter cartridge would include the mentioned nematicide effects amongst its advantages.

The present specification likewise relates to the activated carbon obtained by means of the method described, which contains the organic component extracted from the residue adsorbed in the carbon, as well as the filter cartridge made from said carbon, bearing in mind that both may be used as a nematicide against phytopathogenic nematodes.

In a more preferred embodiment, the active component (Z)-2,6-dimethylocta-5,7-diene-2,3-diol may be obtained in its pure state from the activated carbon, by means of extracting it from the activated carbon. Although this extraction may be carried out by using solvents, it has been found to be more advantageous to extract said carbon and separate it from the organic portion of the residue with supercritical CO₂, thus obtaining an organic extract enriched with the active component and free of carbon. The content in the organic extract of the active component (Z)-2,6-dimethylocta-5,7-diene-2,3-diol varies between 80 % and 100 %, i.e., the composition thereof may even be completely (Z)-2,6-dimethylocta-5,7-diene-2,3-diol. This end enriched organic extract, just like the aqueous residue from which the organic portion is obtained, as well as the organic portion itself extracted in solid form (adsorbed on activated carbon), may be used as a nematicide agent for phytopathogenic nematodes. Said use, of both the activated carbon obtained by means of the previous method and the enriched organic extract itself, may be carried out by means of applying the product to the crop ground, for example, with the same effects as the aqueous residue. An additional advantage of this natural product is that active carbon is used in the production thereof, which is a cheap, non-polluting component, which may even be marketed without the carbon.

The main industrial uses of the essential oils and supercritical extracts obtained in the method consist in being the base material for preparing natural fungicide formula, for particular use in agriculture and more particularly, organic agriculture, as well as being used as an ingredient for mixed formula, i.e. for formula comprising synergistic combinations alongside other natural active components with the same function (fungicide or nematicide, respectively). In turn, the hydrolyte or aqueous residue, in addition to likewise being used as a base material for natural nematicide compositions, may be applied to the crop to be treated directly in the indicated concentrations. The same applies to the activated carbon and organic extract with (Z)-2,6-dimethylocta-5,7-diene-2,3-diol, two products that can be applied directly to phytopathogenic nematodes.

A third object of the present invention is therefore a natural fungicide composition, which contains excipients compatible with organic agriculture and comprises at least one essential oil and/or the supercritical extract mentioned above as an active component, usually (although not exclusively) alongside at least one excipient and one additive, usually used in the field of agriculture. In a more preferred embodiment, the fungicide composition furthermore comprises at least one other active component, which is different from the oil. The fungicide composition comprises a great enough amount of essential oil and/or supercritical extract to be able to inhibit 50 % growth of the fungus, this amount equating to the effective dosage of fungicide action of the essential oil. Said effective dosage varies depending on the fungus to be treated. It is administered at 3-5 % for *Fusarium sp. ,* 2 % for *A. alternata* and 0.3 % for *Botrytis cinerea,* of the total fungicide composition in which it is contained.

In turn, a fourth object of the present invention constitutes a natural nematicide composition comprising the aqueous residue or hydrolate, the organic portion of said aqueous residue or the organic extract rich in (Z)-2,6-dimethylocta-5,7-diene-2,3-diol contained in said organic portion. In a preferred embodiment, the nematicide composition furthermore comprises at least one other active component which differs from the aqueous residue or hydrolate. In a more preferred embodiment still, the nematicide composition consists exclusively of one of the three components mentioned, namely: aqueous residue, the organic portion thereof or the active nematicide component containing said organic portion.

The nematicide composition comprises a great enough amount of aqueous residue or hydrolate, or the organic extract of said hydrolyte to cause 90 % of an inoculation in juvenile plants to die, this amount equating to the effective nematicide action dosage of the hydrolyte, its organic extract or the active nematicide component contained therein. Said effective dosage of the hydrolyte is 50 %. The effective dosage of the organic extract obtained from the hydrolyte is 0.5 µg/µl, it thus being necessary to extract 0.5 µl of hydrolyte to obtain the effective dosage of organic extract (0.5 µg).

As already mentioned, in another preferred embodiment, the natural nematicide composition specifically consists of the aqueous residue or hydrolate, the organic component extracted from the hydrolyte or the active component extracted from said component or organic portion of the residue. Any of these three components in the nematicide composition are diluted at 50 %.

The fungicide and nematicide formula for fighting phytopathogens may be presented as an aqueous solution, in a powder, in a concentrated emulsion or in microcapsules, amongst other forms of known presentation and marketing for this kind of agricultural product.

The fungicide formula comprising the essential oil to control and/or eliminate phytopathogenic fungi in a crop may be used preferably by spraying said formula on the plants in the crop. It is important to understand from the present specification that said use corresponds to a method for controlling and/or eliminating phytopathogenic fungi in a crop comprising spraying the fungicide formula on the plants in the crop.

Likewise, the nematicide formula, composed of just the aqueous residue, the organic extract obtained from the hydrolyte or the active nematicide component, whether or not it includes other, additional components, may be used to control phytopathogenic nematodes in a crop, preferably by applying said formula to the ground. It is also important to understand from the present specification that said use corresponds to a method for controlling phytopathogenic nematodes in a crop comprising applying the nematicide formula to the ground.

### BRIEF DESCRIPTION OF THE DRAWINGS

F**igure 1**. A simplified block diagram of a preferred practical embodiment of the stages of the extraction method for extracting derivatives from the *Artemisia absinthium L.* plant.

### EMBODIMENTS OF THE INVENTION

The invention shall be illustrated below through a preferred examplary embodiment of the method for obtaining organic extracts according to the description given in this specification, as well as through biological activity assays carried out to determine the fungicide and nematicide activity of the oils and the aqueous residues thereof, respectively, which come from experimentally cultivated wormwood and were obtained from three years of crops (2008, 2009 and 2010).

### Example 1. Obtaining essential oil from the Candial variety of the Artemisia absinthum L. plant.

The extraction method, as shows in Figure 1 attached, basically comprises three different stages, namely:
- a stage in which said plant is produced (1),
- a stage in which organic extracts are extracted (2), wherein said essential oil and a non-volatile extract are obtained (3), in addition to the aqueous residue or hydrolates taken from the method, and
- an extraction stage in which supercritical extracts (5) are extracted (4) with CO₂ (22), which have a defined chemical composition.

The methodological stage of production (1) comprises cultivating (6) the selected chemotype of the plant in question in the field, by means of multiplication, which is preferably carried out using cuttings or seeds in a seed nursery (7), in order to subsequently be planted in the plantation area. This plantation area is located in high areas with a rainfall of over 400-450 mm per year and work is carried out by means of mechanical cultivation. Cultivation begins in the first year of planting and should begin with the harvesting (8) of leaves and flower heads when the plants are in full phonological state in full bloom, subsequently going on to dry (9) and then grind (10) the biomass harvested (11). Drying (9) is preferably carried out in the shade, under a current of wind, for a period of approximately 8 days.

The extraction stage in which the organic extracts (2) are extracted is carried out by means of hydro distillation and organic extraction (12) of the harvested material (11), thus obtaining the essential oil and a non-volatile extract (3), in addition to an aqueous or hydrolated by-product, which is a residue of the process. The hydro distillation is carried out using a Clevenger type piece of apparatus and the organic extraction in a piece of Sohxlet apparatus. 800 kg of biomass is introduced in the distillation flask in each distillation carried out, with each distillation process lasting one and a half hours. The essential oils are obtained from this process as well as the hydrolyte. The cooling flow rate of the device is comprised between 150-200 litres, which equates to the amount of hydrolytes generated in each distillation. This amount varies depending on room temperature.

The extraction stage (4) in which supercritical extracts (5) are extracted with CO₂ (22) of a certain chemical composition is carried out using a compression pump (13) with a filter (14), an extraction cylinder (15), two collectors (16,17), a cylindrical cooling device (18), a heat exchanger (19), a pressure sensor (20) and a flow metre (21). The harvested material (11) is thus introduced into the extraction cylinder (15) and soaked up symmetrically with inert, porous materials that enable a homogenous flow of CO₂ (22). It is then heated up until it reaches a temperature of 40 °C, in order for the pump (13) and the CO₂ (22) to later be compressed, until a pressure of 90 bars is reached, at which point the supercritical fluid under working pressure fills the extraction cylinder (15), with the pressure being regulated in the two collectors (16,17), by means of the corresponding valves and the temperature being regulated with the cooling device (18), in such a way that the collectors (16) serve to eliminate heavy compounds such as waxes and the second collector (17) serves to collect the essential oil obtained as supercritical extract.

The average particle size used for the particles collected is 0.5 mm and the gas flows through the extractor cylinder at 25 °C and 1 atm. at 10.5 1/min.

By means of a gas chromatography mass spectrometry (GC-MS) analysis of the essential oils resulting from the three years of harvest, the chemical composition shown in Table 1 was obtained for each one of the two populations of the Candial Artemisia variety analysed.

Below, Tables 2 and 3 show the annual biomass and essential oil performance per population and year of *A. absinthium.*

**Table 2. Annual performance of the crops per A. absinthium population (years 2008-2010) (Kg. of biomass per hectare of cultivated ground)**

| Year | Teruel (Kg/Ha) | Sierra Nevada (Kg/Ha) |
|---|---|---|
| 2008 | 21494 | 18104 |
| 2009 | 23530 | 20612 |
| 2010 | 21355 | 18717 |

**Table 3. Performance of the essential oil (percentage of the green weight of the plant)**

| Year | Teruel | Sierra Nevada |
|---|---|---|
| 2008 | 0.174 % | 0.169 % |
| 2009 | 0.135 % | 0.101 % |
| 2010 | 0.172 % | 0.114 % |

### Example 2. Study of the fungicide activity of the essential oil against phytopathogenic fungi: Fusarium oxysporum, F. moniliforme, F. solani and Botrytys cinerea.

The standardised methods for this type of assays were employed, namely dilution in agar (Murabayashi, 1991) and TLC autography (Rahalison et al, 1993). The results are expressed as a percentage of growth and/or sporulation inhibition and are compared to the control using non-parametric statistical techniques. In order to calculate the level of activity in each one of the products, various concentrations were tested, as shown in Table 4, which make it possible to calculate the effective dosages for inhibiting growth. The results obtained and the dosages tested are shown in Table 4.

It has thus been demonstrated that the essential oils obtained from the Candial variety of the *Artemisia* plant are very active against *Fusarium* spp. and *Alternaria alternata* (with effective EC₅₀ dosages at an average of 0.4 mg/ml). Furthermore, the fact that the effect thereof is around 10 times greater on B. *cinerea* must be emphasised.

**Table 4: Antifungal activity of the oils obtained from the Candial variety of the wormwood plant, in harvests between 2008-2010 (EC₅₀ (µl/ml) value included for 2008-2009)**

| Sample | Concentration (%) | *Fusarium moniliforme* | *F. oxysporum* | *F. solani* | *B. cinerea* | *Alternaria alternata* |
|---|---|---|---|---|---|---|
| AVAaT 2008 | | 100.00±0.00 | 100.00±0.00 | 100.00±0.00 | 100.00±0.00 | 100.00±0.00 |
| | 1.0-0.01 | *0.35 (0.13 -0.56)* | *0.47 (0.71-1.28)* | *0.37(0.5 4*-*1*.*45*) | *0.009(0-0.019)* | *0.14 (0.07-0.2)* |
| AVAaSN 2008 | | 100.00±0.00 | 100.00±0.00 | 100.00±0.00 | 100.00±0. 00 | 100.00±0.00 |
| | 1.0-0.01 | *0.32 (0.004-0.64)* | *0.32 (0.022-0.61)* | *0.39 (0.14-0.63)* | *0.01 (0- 0.39)* | *0.19 (0.11-0.26)* |
| AVAaT 2009 | | 100.00±0.00 | 100.00±0.00 | 100.00±0.00 | 100.00±0.00 | 100.00±0.00 |
| | 1.0-0.01 | *0.38 (0.062-0.69)* | *0.45 (0.17-0.72)* | *0.36 (0.096-0.62)* | *0.067 (0-0.31)* | *0.02 (0-2.9)* |
| AVAaSN 2009 | | 100.00±0.00 | 100.00±0.00 | 100.00±0.00 | 100.00±0.00 | 100.00±0.00 |
| | 1.0-0.01 | *0.39 (0.08-0.69)* | *0.36 (0.065-0.65)* | *0.35 (0.13-0.56)* | *0.016 (0-0.048)* | *0.19 (0.11-0.26)* |
| AVAaT 2010 | | 100±0 | 91.97±1.0 | 93.04±1.39 | 88.73±1.10 | 100.00±0.00 |
| | 1.0-0.01 | *0.35 (0-3.21)* | *0.39 (0-2.25)* | *0.6 (0-1.46)* | *0.027 (0.021-0.032)* | *0.07 (0.03-0*.*1*) |
| AVAaSN 2010 | | 94.16±0.8 | 92.01±0.90 | 88.77±1.56 | 91.96±1.03 | 100.00±0.00 |
| | 1.0-0.01 | *(NC*)* | *0.06 (0-4.28)* | *0.08 (0-4.9)* | *0.026 (0-0.39)* | *0.2 (0.13-0.26)* |

| | | | | | | |
|---|---|---|---|---|---|---|
| *T: Teruel population* *NS: Sierra Nevada population* *(NC*):* the EC₅₀ was not calculated. | | | | | | |

### Example 3. Nematicide activity against nematodes that form nodules: Meloidogyne javanica.

The assays were carried out according to the methodology described for *Meloidogyne sp* (Hernández-Carlos et al. 2011, Sosa et al. 2012) using the biological stage of infected juvenile (J2) *Meloidogyne javanica* in the assays. The activity of each product was quantified at different concentrations, shown in Table 5 and in at least four copies, each bio-assay was repeated at least three times and the nematostatic/nematicide activity was determined from the percentage of infected juvenile plants immobilised/which died.

The results obtained and the concentrations tested are shown in Table 5. They show that all the hydrolytes have a maximum activity at the highest concentration maintained, for most of them at a solution of 50 %.

**Table 5. Nematicide activity of the wormwood oils, 2008-2010 crops**

| Sample | Concentration (%) | *M. javanica* % J2 immobilised |
|---|---|---|
| | | Average |
| AQAaT 2008 | 100 | 100 |
| | 50 | 100 |
| | 25 | 6.36 |
| | 10 | 1.21 |
| AQAaSN 2008 | 100 | 100 |
| | 50 | 100 |
| | 25 | 4.30 |
| | 10 | 0.22 |
| AQAaT 2009 | 100 | 100 |
| | 50 | 100 |
| | 25 | 6.25 |
| | 10 | 0 |
| AQAaSN 2009 | 100 | 100 |
| | 50 | 100 |
| | 25 | 6.15 |
| | 10 | 0 |
| AQAaT 2010 | 50 | 100 |
| | 50 | 100 |
| | 33 | 20.39 |
| | 25 | 18.53 |
| AQAaSN 2010 | 100 | 100 |
| AQAaSN 2010 | 50 | 58.57 |
| | 33 | 5.86 |
| | 25 | 3.75 |
| Organic extract AQ (SN+T) | 1 µg/µl | 91.3 |
| (Z)-2,6-d i methylocta-5,7-d iene-2,3-diol | 0.5 µg/µl | 100 |
| | 0.25 µg/µl | 43.9 |
| | 0.1 µg/µl | 19.7 |
| | 0.02 µg/µl | 4.2 |

| | | |
|---|---|---|
| *T: Teruel Population* *NS: Sierra Nevada Population* | | |

## Claims

1. Use of an essential oil and/or a supercritical extract extracted from the Candial variety of the *Artemisia absinthium L.* plant from Teruel and/or the Sierra Nevada by means of a method comprising: a methodological stage for producing said plant, an extracting stage for extracting organic extracts, in which said essential oil and a non-volatile extract are obtained, and an extraction stage with CO₂ for extracting supercritical extracts, as a fungicide against phytopathogenic fungi.

2. The use according to claim 1, wherein the essential oil contains epoxyocimene at a percentage comprised between 26 % and 44 % of the total composition; chrysanthenol at a percentage comprised between 12 % and 30 % of the total composition, and (Z)-2,6-dimethylocta-5,7-diene-2,3-diol at a percentage comprised between 0.001 % and 20 % of the total composition.

3. The use according to any one of claims 1 to 2, as a fungicide against the phytopathogenic fungi *Alternaria alternata, Fusarium oxysporum, F. moniliforme, F. solani* and *Botrytis cinerea.*

4. A natural fungicide composition against phytopathogenic fungi, **characterised in that** it comprises the essential oil and/or the supercritical extract extracted from the Candial variety of the *Artemisia absinthium L.* plant from Teruel and/or the Sierra Nevada, as defined in any one of claims 1 to 3, as an active component.

5. The natural fungicide composition according to claim 4, which comprises at least one excipient and at least one adjuvant of those employed in agriculture.

6. The natural fungicide composition according to any one of claims 4 or 5, which comprises at least one other active component against phytopathogenic fungi.

7. The natural fungicide composition according to any one of claims 4 to 6, which comprises a great enough amount of said essential oil and/or of the supercritical extract to achieve 50 % inhibition in fungi growth.

8. A method for controlling and/or eliminating phytopathogenic fungi from a crop, **characterised in that** it comprises spraying the natural fungicide composition defined in any one of claims 4 to 7 on the plants in the crop.

9. An aqueous residue generated in an extraction method for extracting essential oil and a supercritical extract from the Candial variety of the *Artemisia absinthium L* plant from Teruel and/or the Sierra Nevada, which comprises: a methodological stage for producing said plant, an extracting stage of organic extracts, wherein said essential oil and a non-volatile extract are obtained, and an extraction stage with CO₂ for supercritical extracts; said aqueous residue being generated in the stage in which the essential oil is obtained and the formula thereof comprising an organic component in turn containing (Z)-2,6-dimethylocta-5,7-diene-2,3-diol as active organic compound against nematodes.

10. Use of the aqueous residue described in the previous claim as a nematicide against phytopathogenic nematodes.

11. Use of the organic component contained in the aqueous residue described in claim 9 as a nematicide against phytopathogenic nematodes.

12. Use of the organic compound contained in the organic component of the aqueous residue described in claim 9 as a nematicide against phytopathogenic nematodes.

13. An extracting method for extracting the organic component contained in the aqueous residue described in claim 9 in solid state, which comprises the following steps:
a) decanting the aqueous residue to remove traces of essential oil;
b) mixing by stirring the previous aqueous phase with activated carbon, in a ratio of 10:1, until the organic component of the aqueous residue is adsorbed; and
c) drying the carbon at 35°C, in order to obtain activated carbon with the organic component adsorbed.

14. An activated carbon obtained by means of the method described in the previous claim, comprising the organic component extracted from the aqueous residue.

15. A filter cartridge made from the activated carbon described in the previous claim.

16. Use of the activated carbon defined in claim 14 or of the filter cartridge defined in claim 15 as a nematicide against phytopathogenic nematodes.

17. An extracting method according to claim 12, which further comprises obtaining an organic extract enriched with the active compound by means of supercritical CO₂ extraction of the active organic component adsorbed in the activated carbon.

18. An organic extract enriched with the active nematicide compound obtained by means of the method described in the previous claim.

19. Use of the organic extract described in the previous claim as a nematicide against phytopathogenic nematodes.

20. The use according to any one of the claims 10, 11, 12, 16 and 19 as a nematicide for fighting against phytopathogenic nematodes that form nodules.

21. The use according to the previous claim, against *Meloidogyne* sp.

22. A natural nematicide composition against phytopathogenic nematodes, **characterised in that** it comprises at least the aqueous residue described in claim 9, the organic component thereof or the active compound thereof against nematodes.

23. The natural nematicide composition according to claim 21, which comprises at least one excipient and at least one adjuvant of those employed in agriculture.

24. The natural nematicide composition according to any one of claims 21 or 22, which comprises at least one other active component against phytopathogenic nematodes.

25. The natural nematicide composition according to any one of claims 21 or 22, which comprises a great enough amount of said aqueous residue or of the organic portion extracted from said residue for causing 90 % of an inoculation in juvenile plants to die.

26. The natural nematicide composition according to claim 21, which consists of the aqueous residue, its organic component or its active compound against nematodes, the same being diluted by at least 50 %.

27. A method for controlling and/or eliminating phytopathogenic nematodes from a crop, **characterised in that** it comprises applying the natural nematicide composition defined in any one of claims 21 to 25 on the ground.

28. The use according to any one of claims 1, 2, 3, 10, 11, 12, 16, 19, 20 and 21 in organic agriculture.
